(19)

Europäisches
Patentamt
European
Patent Office
Office européen
des brevets

(11) **EP 4 786 936 A1**

(12) **EUROPEAN PATENT APPLICATION**
published in accordance with Art. 153(4) EPC

(43) Date of publication:
**05.08.2026 Bulletin 2026/32**

(21) Application number: **24881456.8**

(22) Date of filing: **14.10.2024**

(51) International Patent Classification (IPC):
***G01L 1/14*** *(2006.01)*

(86) International application number:
**PCT/CN2024/124654**

(87) International publication number:
**WO 2025/087090 (01.05.2025 Gazette 2025/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.10.2023 CN 202311403540**

(71) Applicant: **Beijing Aurasky Electronics Co., Ltd.**
**Beijing 100176 (CN)**

(72) Inventors:
• **ZHANG, Feng**
**Beijing 100176 (CN)**
• **SONG, Junfei**
**Beijing 100176 (CN)**
• **MOU, Changhua**
**Beijing 100176 (CN)**
• **ZHAO, Di**
**Beijing 100176 (CN)**
• **HU, Lei**
**Beijing 100176 (CN)**
• **LI, Xiao**
**Beijing 100176 (CN)**
• **YANG, Qingli**
**Beijing 100176 (CN)**
• **RUAN, Xiangjuan**
**Beijing 100176 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **ELECTRODE MEMBER AND PRESSURE SENSOR**

(57)      The present disclosure provides an electrode member (3) for forming, in a cavity (1) of a pressure sensor, a capacitor together with a movable membrane (2) disposed in the cavity (1). The electrode member (3) includes an insulating body having a first surface (31) and a second surface opposite to each other, and the first surface (31) and the second surface are respectively provided with conductive layers (32) electrically connected to each other; the insulating body is provided with a notch structure in the first surface (31), and an orthographic projection of the notch structure on the first surface (31) partially overlaps an orthographic projection of a washer (6) on the first surface (31), with the washer (6) being on the first surface (31). When an operator replaces the washer (6), contact and friction between tweezers and the electrode member (3) can be avoided or a shear stress generated in case of contact can be reduced, thereby reducing or even avoiding particle shedding. The present disclosure further provides a pressure sensor adopting the electrode member (3).

FIG. 1

EP 4 786 936 A1

## Description

### TECHNICAL FIELD

The present disclosure relates to the field of semiconductor manufacturing, and in particular, to an electrode member and a pressure sensor.

### BACKGROUND

At present, a pressure sensor (e.g., a vacuum gauge) includes an upper support, a movable membrane, and a lower support, which are sequentially connected from top to bottom, a lower space is formed between the movable membrane and the lower support, and an upper space is formed between the movable membrane and the upper support; and an electrode member is disposed in the upper space, and the electrode member is disposed opposite to the movable membrane, thereby forming a plate capacitor. Moreover, a spring is disposed between the electrode member and a top cover, and the spring is in a compressed state for applying pressure to the electrode member to fix the electrode member. The pressure needs to be higher than that in the lower space, but shall not be too high, otherwise the electrode member is cracked due to excessive local normal stress or shear stress, resulting in product failure. In order to control the pressure, a washer may be disposed between the spring and the electrode member, and the degree of compressive deformation of the spring may be adjusted by adjusting a thickness of the washer, thereby adjusting the magnitude of the pressure.

The above process of adjusting the pressure needs repeatedly replacement of washers with different thicknesses. For example, a washer with a thickness of 1 mm may be disposed first, then other parts are mounted in the upper space; if it is found that the pressure for fixing the electrode member is too low after the top cover is pressed down to a designated position of the upper support, the washer is replaced with another washer with a thickness of 2 mm; and the above process is repeated until a washer with a proper thickness is found.

For replacing the washer, an operator first uses tweezers to pick up the washer from the electrode member. During the pick-up operation, contact and friction between the tweezers and the electrode member are inevitable because the washer is thin, excessive shear stress between the tweezers and the electrode member leads to falling of small particles off surfaces of the tweezers and the electrode member, and the small particles stay in the upper space and may probably move between the movable membrane and the electrode member, resulting in a change of a capacitance value; and the change of the capacitance value further causes a change of an output signal of a product, and may even cause a short circuit between two electrodes of the capacitor, resulting in the product failure.

### SUMMARY

The present disclosure aims to solve at least one of the technical problems in the existing technology, provides an electrode member and a pressure sensor, and can avoid contact and friction between tweezers and the electrode member or reduce a shear stress generated in case of contact when an operator replaces a washer, thereby reducing or even avoiding particle shedding.

In order to achieve the objectives of the present disclosure, there is provided an electrode member for forming, in a cavity of a pressure sensor, a capacitor together with a movable membrane disposed in the cavity, the electrode member includes an insulating body, the insulating body has a first surface and a second surface opposite to each other, and the first surface and the second surface are respectively provided with conductive layers electrically connected to each other; and

the insulating body is provided with a notch structure in the first surface, and an orthographic projection of the notch structure on the first surface partially overlaps an orthographic projection of a washer on the first surface, the washer being on the first surface.

In some embodiments, the notch structure includes at least one recess, an orthographic projection of an outermost edge of the recess away from a center of the first surface on the first surface at least partially falls within the orthographic projection of the washer on the first surface, and an orthographic projection of an innermost edge of the recess close to the center of the first surface on the first surface is at least partially located outside an inner circumferential edge of the orthographic projection of the washer on the first surface.

In some embodiments, the recess includes an annular recess, which is disposed around the center of the first surface.

In some embodiments, the recess includes a blind hole; or the recess includes a through groove having one end extending to an edge of the first surface.

In some embodiments, an opening size of the through groove in a circumferential direction of the first surface decreases from a top of the through groove to a bottom of the through groove in a depth direction of the through groove.

In some embodiments, a depth of the through groove increases from an end away from the edge of the first surface to the end located on the edge of the first surface.

In some embodiments, the notch structure includes at least one notch surface, which is formed on an edge of the first surface and recessed relative to the first surface in a direction away from the first surface.

In some embodiments, the notch surface includes at least one of a stepped surface, an inclined surface, or a curved surface.

In some embodiments, the notch surface is an annular surface in a circumferential direction of the first surface, and an inner diameter of the annular surface is greater than an inner diameter of the washer and less than an outer diameter of the washer.

In some embodiments, an orthographic projection of an innermost edge of the notch surface close to a center of the first surface on the first surface is at least partially located between an orthographic projection of an inner circumferential edge of the washer on the first surface and an orthographic projection of an outer circumferential edge of the washer on the first surface.

As another technical solution, the present disclosure further provides an electrode member for forming, in a cavity of a pressure sensor, a capacitor together with a movable membrane disposed in the cavity, the electrode member includes an insulating body, the insulating body has a first surface and a second surface opposite to each other, and the first surface and the second surface are respectively provided with conductive layers electrically connected to each other; and the insulating body is provided with a notch structure in the first surface, the notch structure includes at least one recess, a preset distance is provided between an innermost edge of the recess close to a center of the first surface and the center of the first surface in a radial direction of the first surface, and the preset distance is such configured that an innermost edge of the notch structure close to the center of the first surface is at least partially exposed in the cavity.

In some embodiments, a ratio of the preset distance to a radius of the first surface is equal to or greater than 0.5 and equal to or less than 0.9; or the preset distance is greater than or equal to 5 mm and less than or equal to 35 mm.

In some embodiments, the recess includes an annular recess, which is disposed around the center of the first surface.

In some embodiments, the recess includes a blind hole; or the recess includes a through groove having one end extending to an edge of the first surface.

In some embodiments, an opening size of the through groove in a circumferential direction of the first surface decreases from a top of the through groove to a bottom of the through groove in a depth direction of the through groove.

In some embodiments, a depth of the through groove increases from an end away from the edge of the first surface to the end located on the edge of the first surface.

As another technical solution, the present disclosure further provides an electrode member for forming, in a cavity of a pressure sensor, a capacitor together with a movable membrane disposed in the cavity, the electrode member includes an insulating body, the insulating body has a first surface and a second surface opposite to each other, and the first surface and the second surface are respectively provided with conductive layers electrically connected to each other; and

the insulating body is provided with a notch structure in the first surface, and the notch structure includes at least one notch surface, which is formed on an edge of the first surface and recessed relative to the first surface in a direction away from the first surface.

In some embodiments, the notch surface includes at least one of a stepped surface, an inclined surface, or a curved surface.

In some embodiments, the notch surface is an annular surface in a circumferential direction of the first surface, and an inner diameter of the annular surface is greater than an inner diameter of a washer and less than an outer diameter of the washer.

In some embodiments, a preset distance is provided between at least a part of an orthographic projection of an innermost edge of the notch surface close to a center of the first surface on the first surface and the center of the first surface in a radial direction of the first surface.

In some embodiments, a ratio of the preset distance to a radius of the first surface is equal to or greater than 0.6 and equal to or less than 1; or the preset distance is greater than or equal to 7 mm and less than or equal to 40 mm.

As another technical solution, the present disclosure further provides a pressure sensor, including a cavity, and an electrode member, a movable membrane, and a washer are disposed in the cavity, wherein the electrode member is supported by a supporting portion disposed in the cavity, and forms a capacitor together with the movable membrane; and the electrode member is the electrode member provided herein; the washer is disposed on the first surface of the insulating body of the electrode member.

In some embodiments, the pressure sensor further includes an elastic member, which is disposed between the washer and a top wall of the cavity for pressing the insulating body against the supporting portion through the washer; wherein the elastic member includes a wave spring, the wave spring has n crests and n troughs, and n is an integer greater than 1; and the notch structure includes at least one recess, and a maximum dimension of the recess in a circumferential direction of the first surface is equal to or less than 1/n of a circumference of a circle where the maximum dimension lies.

In some embodiments, the pressure sensor further includes an elastic member, which is disposed between the washer and a top wall of the cavity for pressing the insulating body against the supporting portion through the washer; wherein the elastic member includes a wave spring, the wave spring has n crests and n troughs, and n is an integer greater than 1;

the notch structure includes a notch surface formed on an edge of the first surface; and a maximum dimension of the notch surface in a circumferential direction of the first surface is equal to or less than 1/n of a circumference of a circle where the maximum dimension lies.

In some embodiments, the cavity includes an upper support, a lower support, and a top cover; wherein the upper support and the lower support are located on a side of an upper surface of the movable membrane and a side of a lower surface of the movable membrane respectively, and are both hermetically connected to the movable membrane;

a recess is formed in an upper surface of the lower support, and a lower space is formed between the lower surface of the movable membrane and the recess;
the top cover is located on a side of an upper surface of the upper support, is hermetically connected to the upper support, and serves as a top wall of the cavity; an upper space is enclosed by a lower surface of the top cover, the upper surface of the movable membrane, and an inner circumferential surface of the upper support; and the insulating body is located in the upper space, and is supported by the supporting portion of the upper support.

The present disclosure has the following beneficial effects.

In the electrode member provided in the present disclosure, the notch structure is formed in the first surface of the insulating body of the electrode member, and the orthographic projection of the notch structure on the first surface partially overlaps the orthographic projection of the washer on the first surface, with the washer being on the first surface. On the one hand, "partially overlap" refers to that a part of the notch structure is exposed in the cavity and the other part is covered by the washer. In this way, when an operator replaces the washer, the operator can insert tweezers into the part of the notch structure which is exposed in the cavity, and pick up the washer from the electrode member, without contact and friction between the tweezers and the electrode member or with a reduced shear stress in case of contact, thereby reducing or even avoiding particle shedding. On the other hand, "partially overlap" refers to that a gap below the washer is provided between the notch structure and a part of the washer and the other part of the washer is in contact with the first surface of the insulating body. In this way, the electrode member can still support the washer; meanwhile, by providing the gap between the notch structure and a part of the washer, the operator can press the part of the washer corresponding to the gap with the tweezers to tilt the washer, and then pick up the washer, which does not affect stiffness of the electrode member, and also causes no contact and friction between the tweezers and the electrode member, thereby avoiding the particle shedding.

In the electrode member further provided in the present disclosure, the notch structure is formed in the first surface of the insulating body of the electrode member, the notch structure includes at least one recess, the preset distance is provided between the innermost edge of the recess close to the center of the first surface and the center of the first surface in the radial direction of the first surface, and the preset distance is such configured that the innermost edge of the notch structure close to the center of the first surface can be at least partially exposed in the cavity. By exposing a part of the notch structure in the cavity and covering the other part of the notch structure by the washer, when the operator replaces the washer, the operator can insert the tweezers into the part of the notch structure which is exposed in the cavity, and pick up the washer from the electrode member, without contact and friction between the tweezers and the electrode member or with a reduced shear stress in case of contact, thereby reducing or even avoiding the particle shedding.

In the electrode member further provided in the present disclosure, the notch structure is formed in the first surface of the insulating body of the electrode member, and the notch structure includes at least one notch surface which is formed on the edge of the first surface and recessed relative to the first surface in the direction away from the first surface. By making the notch structure recessed relative to the first surface in the direction away from the first surface, a gap below the washer can be provided between the notch surface and a part of the washer, and the other part of the washer can contact the first surface of the insulating body. In this way, the insulating body can still support the washer; meanwhile, by providing the gap between the notch structure and a part of the washer, the operator can press the part of the washer corresponding to the gap with the tweezers to tilt the washer, and then pick up the washer, which not only has a relatively small effect on the stiffness of the electrode member, but also causes no contact and friction between the tweezers and the electrode member, thereby avoiding the particle shedding.

The pressure sensor provided in the present disclosure adopts the electrode member provided in the present disclosure, so that when the operator replaces the washer, contact and friction between the tweezers and the electrode member can be avoided or a shear stress generated in case of contact can be reduced, thereby reducing or even avoiding the particle shedding.

BRIEF DESCRIPTION OF DRAWINGS

FIG. 1 is a cross-sectional view of a pressure sensor according to a first embodiment of the present disclosure;
FIG. 2 is a structural diagram of an electrode member of FIG. 1;
FIG. 3 is another cross-sectional view of a pressure sensor according to the first embodiment of the present disclosure;

FIG. 4 is another structural diagram of an electrode member according to the first embodiment of the present disclosure;

FIG. 5 is yet another cross-sectional view of a pressure sensor according to the first embodiment of the present disclosure;

FIG. 6 is a structural diagram of an electrode member of FIG. 5;

FIG. 7 is a cross-sectional view of a pressure sensor according to a second embodiment of the present disclosure;

FIG. 8 is a structural diagram of an electrode member of FIG. 7;

FIG. 9 is another cross-sectional view of a pressure sensor according to the second embodiment of the present disclosure;

FIG. 10 is a structural diagram of an electrode member of FIG. 9; and

FIG. 11 is a structural diagram of a wave spring adopted in the present disclosure.

## DETAIL DESCRIPTION OF EMBODIMENTS

In order to enable those of ordinary skill in the art to better understand the technical solutions of the present disclosure, an electrode member and a pressure sensor provided in the present disclosure are described in detail below with reference to the drawings.

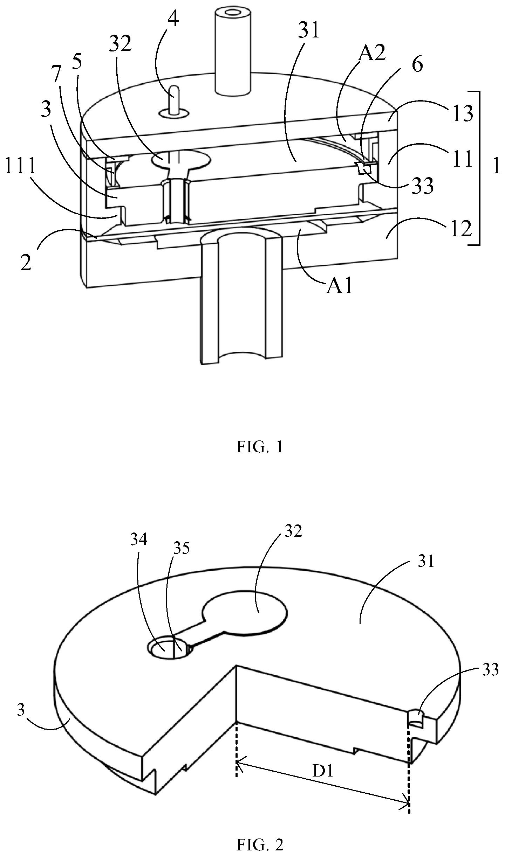

The electrode member provided by in the embodiments of the present disclosure is configured to form, in a cavity of a pressure sensor, a capacitor together with a movable membrane disposed in the cavity. In an embodiment of the present disclosure, referring to FIG. 1, a cavity 1 includes an upper support 11, a lower support 12, and a top cover 13, the upper support 11 and the lower support 12 are located on a side of an upper surface of the movable membrane 2 and a side of a lower surface of the movable membrane 2 respectively, and are both hermetically connected to the movable membrane 2, for example, by welding. Moreover, a recess is formed in an upper surface of the lower support 12, and a lower space A1 is formed between the lower surface of the movable membrane 2 and the recess; the top cover 13 is located on a side of an upper surface of the upper support 11, and is hermetically connected to the upper support 11, for example, by welding, and the top cover 13 serves as a top wall of the cavity 1; an upper space A2 is enclosed by a lower surface of the top cover 13, the upper surface of the movable membrane 2, and an inner circumferential surface of the upper support 11; and an electrode member 3 is located in the upper space A2, and is supported by a supporting portion 111 of the upper support 11, and the supporting portion 111 is, for example, an annular boss formed on an inner circumferential wall of the upper support 11.

A pressure in the upper space A2 is known, the upper space A2 is referred to herein as a reference chamber and is generally in a high vacuum state, and a pressure value of the upper space A2 is set as Pr; and the lower space A1 communicates with a space to be tested through a pipeline, and is referred to herein as a test chamber, and a pressure value of the lower space A1 is set as Px. When Px increases, the movable membrane 2 bulges upwards due to an increase of an upward force applied thereto, so that a capacitance value C of a plate capacitor formed by the electrode member 3 and the movable membrane 2 and a distance d between the upper surface of the movable membrane 2 and a lower surface of the electrode member 3 has the following relationship:

$$C = \varepsilon S / d$$

where S denotes an opposing area between the upper surface of the movable membrane 2 and the lower surface of the electrode member 3; and $\varepsilon$ denotes a dielectric constant of a substance between the upper surface of the movable membrane 2 and the lower surface of the electrode member 3. When Px changes, a shape of the movable membrane 2 changes, the distance d changes, and the capacitance value C changes accordingly. Specifically, as shown in FIG. 2, the electrode member 3 may include an insulating body having a first surface and a second surface opposite to each other, and the first surface faces away from the movable membrane 2; and the second surface faces the movable membrane 2. For example, the first surface and the second surface are an upper surface and a lower surface of the insulating body shown in FIG. 2, respectively. Moreover, the first surface and the second surface are respectively provided with two conductive layers 32 electrically connected to each other. The two conductive layers 32 are electrically connected in a way, for example, that a through hole 34 penetrating through the insulating body in a vertical direction is provided in the insulating body, a conductive connecting layer 35 is disposed in the through hole 34, and the two conductive layers 32 are electrically connected to each other through the conductive connecting layer 35; and the plate capacitor is formed between the conductive layer 32 on the lower surface (i.e., the second surface) of the insulating body and the movable membrane 2. As shown in FIG. 1, the conductive layer 32 on the upper surface (i.e., the first surface) of the insulating body extends to the outside through a pin or a wire 4 penetrating through the top cover 13, and is connected to an external circuit board (not shown) for detection of a change of the capacitance value C and further calculation of Px.

An elastic member 5 is disposed between the electrode member 3 and the top cover 13, the elastic member 5 is in a compressed state for applying a pressure to the electrode member 3 to fix the electrode member 3. The pressure needs to be greater than that in the lower space A1 to ensure that the electrode member 3 can be fixed on the supporting portion 111, but the pressure should not be too high, otherwise the electrode member 3 is cracked due to excessive local normal stress or shear stress, resulting in product failure. In order to control the pressure, a washer 6 may be disposed between the elastic member 5 and the electrode member 3, and a degree of compressive deformation of the elastic member 5 may be adjusted by adjusting a thickness of the washer 6, thereby adjusting the magnitude of the pressure. In some embodiments, an upper ring 7 is further disposed between the washer 6 and the elastic member 5 for supporting the elastic member 5, so as to improve connection stability. The elastic member 5 is, for example, a wave spring.

First Embodiment

The insulating body of the electrode member 3 provided in the embodiment of the present disclosure is provided with a notch structure in the first surface 31 (away from the movable membrane 2), and an orthographic projection of the notch structure on the first surface 31 partially overlaps an orthographic projection of the washer 6 on the first surface 31, with the washer 6 being on the first surface 31.

In the present embodiment, "partially overlap" refers to that a part of the notch structure is exposed in the cavity 1 and the other part is covered by the washer 6. In this way, when an operator replaces the washer 6, the operator can insert tweezers into the part of the notch structure which is exposed in the cavity 1, and pick up the washer 6 from the electrode member 3, without contact and friction between the tweezers and the electrode member 3 or with a reduced shear stress in case of contact, thereby reducing or even avoiding particle shedding.

In an embodiment of the present disclosure, the notch structure includes at least one recess. For example, FIG. 1 shows a recess, an orthographic projection of an outermost edge of the recess away from a center of the first surface 31 on the first surface 31 at least partially falls within an orthographic projection of the washer 6 on the first surface 31, and an orthographic projection of an innermost edge of the recess close to the center of the first surface 31 on the first surface 31 is at least partially located outside an inner circumferential edge of the orthographic projection of the washer 6 on the first surface 31. In this way, an outer portion of the recess away from the center of the first surface 31 is at least partially covered by the washer 6, and an inner portion of the recess close to the center of the first surface 31 is at least partially exposed in the cavity 1, that is, not covered by the washer 6. Thus, when the operator replaces the washer 6, the operator can insert the tweezers into the inner portion of the recess, and pick up the washer 6 from the electrode member 3, without contact and friction between the tweezers and the electrode member 3 or with a reduced shear stress in case of contact, thereby reducing or even avoiding the particle shedding.

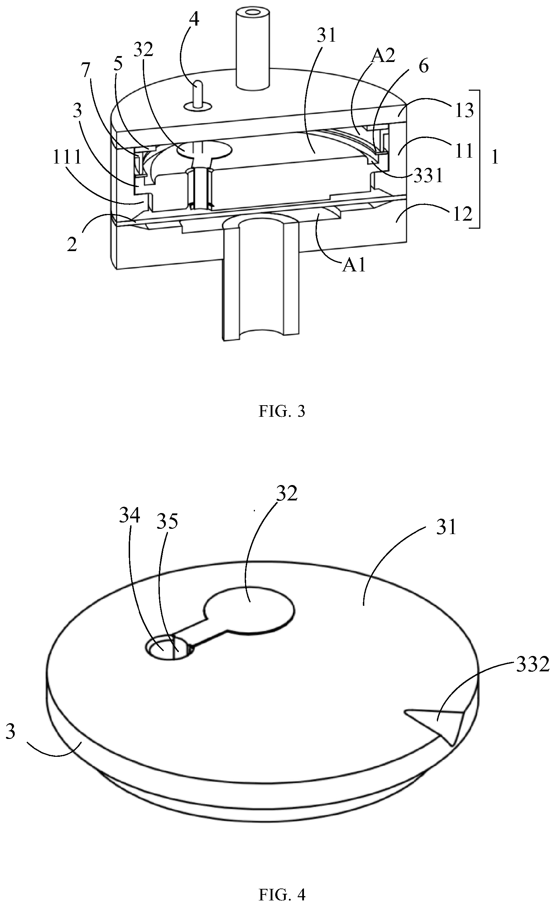

The recess may have various structures. For example, as shown in FIG. 2, the recess of the notch structure includes a blind hole 33, and an outermost edge of the blind hole 33 away from the center of the first surface 31 is disposed apart from an edge of the first surface 31. Moreover, an outer portion of the blind hole 33 away from the center of the first surface 31 is covered by the washer 6, and an inner portion of the blind hole 33 close to the center of the first surface 31 is exposed in the cavity 1, that is, not covered by the washer 6. Thus, when the operator replaces the washer 6, the operator can insert the tweezers into the inner portion of the blind hole 33, and pick up the washer 6 from the electrode member 3. An opening of the blind hole 33 is smaller than that of an annular recess 331 (described in detail below) shown in FIG. 3, so that low stiffness of the electrode member 3 can be avoided, which can prevent the electrode member 3 from cracking due to low stiffness when the pressure in the upper space A2 is too high. Moreover, a processing method of the blind hole 33 is simple, which can reduce processing cost. In practical applications, a depth and opening area of the blind hole 33 should not be too small, otherwise the operator is likely to contact the electrode member 3 when replacing the washer 6; but the depth and opening area of the blind hole 33 should not be too large, otherwise the stiffness of the electrode member 3 may be reduced.

For example, as shown in FIG. 3, the recess includes an annular recess 331 disposed around the center of the first surface 31. An outer portion of the annular recess 331 away from the center of the first surface 31 is at least partially covered by the washer 6, and an inner portion of the annular recess 331 close to the center of the first surface 31 is at least partially exposed in the cavity 1, that is, not covered by the washer 6, so that an inner portion of the washer 6 is suspended above the outer portion of the annular recess 331. Thus, when the operator replaces the washer 6, the operator can easily insert the tweezers into the inner portion of the annular recess 331 to grip the suspended inner portion of the washer 6. A region of the first surface 31 which is on an outer side of the annular recess 331 is in contact with the washer 6, and functions to support the washer 6 to prevent the washer 6 from being suspended.

Alternatively, as shown in FIG. 4, the recess may include a through groove 332 having one end extending to the edge of the first surface 31, that is, an outermost edge of the through groove 332 away from the center of the first surface 31 is located on the edge of the first surface 31. An outer portion of the through groove 332 away from the center of the first surface 31 is covered by the washer 6, and an inner portion of the through groove 332 close to the center of the first surface 31 is exposed in the cavity 1, that is, not covered by the washer 6. Thus, when the operator replaces the washer 6, the operator can insert the tweezers into the inner portion of the through groove 332, and pick up the washer 6 from the electrode member 3. Since the end of the through groove 332 extends to the edge of the first surface 31 and the through groove 332 is provided with no outer sidewall, when the operator inserts the tweezers into the through groove 332, the tweezers can be prevented from being inserted so deep that the tweezers contact the electrode member 3. An opening of the through groove 332 is smaller than that of the annular recess 331, so that low stiffness of the electrode member 3 can be avoided, which can prevent the electrode member 3 from cracking due to low stiffness when the pressure in the upper space A2 is too high. Moreover, a processing method of the through groove 332 is simple, which can reduce processing cost. In practical applications, a depth and opening area of the through groove 332 should not be too small, otherwise the operator is likely to contact the electrode member 3 when replacing the washer 6; but the depth and opening area of the through groove 332 should not be too large, otherwise the stiffness of the electrode member 3 may be reduced.

In an embodiment of the present disclosure, an opening size of the through groove 332 in a circumferential direction of the first surface 31 decreases from a top of the through groove 332 to a bottom of the through groove 332 in a depth direction of the through groove 332. In this way, a cross-sectional shape of the through groove 332 in a direction perpendicular to an extension direction of the through groove 332 (i.e., a direction from an innermost edge of the through groove 332 close to the center of the first surface 31 to the outermost edge of the through groove 332 away from the center of the first surface 31) is approximately a V shape, which is similar to an outer contour of the tweezers used for picking up the washer 6. Thus, even if the tweezers contacts an inner surface of the through groove 332, contact area of the tweezers with the through groove 332 is large due to the similarity in shape, and a shear stress between contact surfaces of the tweezers and the through groove 332 is relatively low, which can reduce shedding of small particles caused by an excessive shear stress.

In an embodiment of the present disclosure, the depth of the through groove 332 increases from one end away from the edge of the first surface 31 (i.e., the innermost edge of the through groove 332 close to the center of the first surface 31) to the other end located on the edge of the first surface 31 (i.e., the outermost edge of the through groove 332 away from the center of the first surface 31). The operator typically inserts the tweezers into the through groove 332 in a direction from the end of the through groove 332 away from the edge of the first surface 31 to the other end of the through groove 332. In such case, by increasing the depth of the through groove 332 from the end away from the edge of the first surface 31 to the other end located on the edge of the first surface 31, the space of the outer portion of the through groove 332 can be increased, so that the tweezers can be prevented from being inserted so deep that the tweezers contact the inner surface of the through groove 332; even if the tweezers contact the inner surface of the through groove 332, the contact area between the tweezers and the through groove 332 is large due to an inclined bottom surface of the through groove 332, and the shear stress between the contact surfaces of the tweezers and the through groove 332 is relatively low, so that the shedding of small particles caused by the excessive shear stress can be avoided. Specifically, the bottom surface of the through groove 332 may be an inclined surface (a flat surface) or an inclined curved surface. It should be noted that in the present embodiment, as shown in FIG. 4, the opening size of the through groove 332 in the circumferential direction of the first surface 31 may decrease from the top to the bottom of the through groove 332 in the depth direction of the through groove 332, and the depth of the through groove 332 may increase from the end away from the edge of the first surface 31 to the other end located on the edge of the first surface 31.

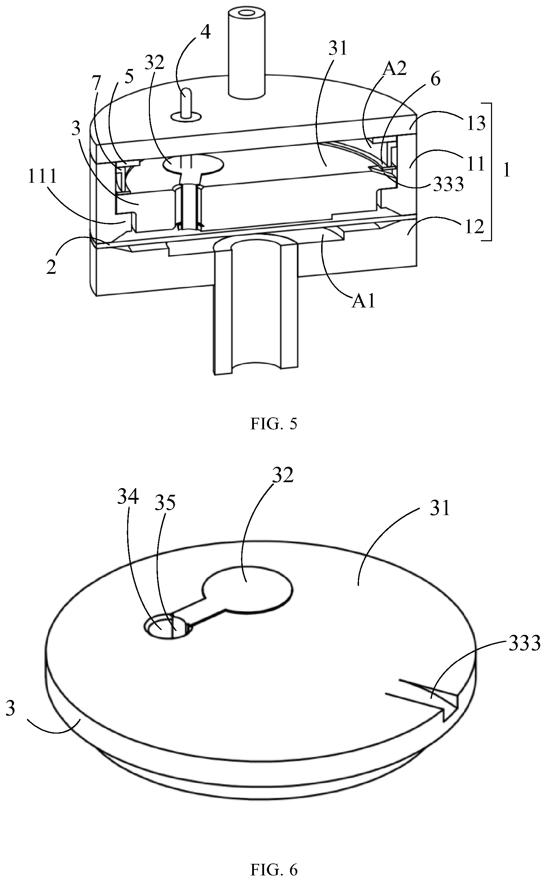

However, the present disclosure is not limited to the above. In practical applications, as shown in FIG. 5 and FIG. 6, the recess may include a through groove 333 having one end extending to the edge of the first surface 31, an opening size of the through groove 333 in the circumferential direction of the first surface 31 is the same everywhere in a depth direction of the through groove 333, and a depth of the through groove 333 increases from one end away from the edge of the first surface 31 to the other end located on the edge of the first surface 31. Alternatively, the depth of the through groove 333 may be the same everywhere from one end away from the edge of the first surface 31 to the other end located on the edge of the first surface 31.

Second embodiment

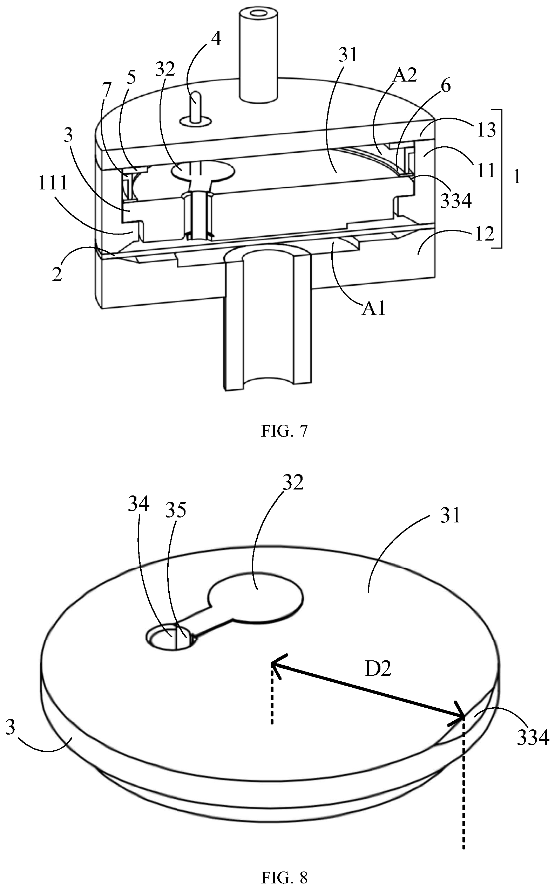

Compared with the electrode member 3 provided in the first embodiment, the electrode member 3 provided in the second embodiment of the present disclosure is also provided with a notch structure in the first surface 31 of the insulating body, and an orthographic projection of the notch structure on the first surface 31 partially overlaps an orthographic projection of the washer 6 on the first surface 31, with the washer 6 being on the first surface 31. The second embodiment differs from the first embodiment only in that the notch structure includes at least one notch surface 334 which is formed on an edge of the first surface 31 and recessed relative to the first surface 31 in a direction away from the first surface 31, as shown in FIG. 7 and FIG. 8.

In this case, "partially overlap" refers to that a gap below the washer 6 is provided between the notch structure and a portion of the washer 6 and the other portion of the washer 6 is in contact with the first surface 31 of the insulating body. In this way, the insulating body may still support the washer 6; meanwhile, by providing the gap between the notch structure and the washer 6, the operator can press the portion of the washer 6 corresponding to the gap with the tweezers to tilt the washer 6, and then pick up the washer 6, which not only has a relatively small effect on the stiffness of the electrode member 3, but also causes no contact and friction between the tweezers and the electrode member 3, thereby avoiding the particle shedding.

In an embodiment of the present disclosure, the notch surface 334 includes at least one of a stepped surface, an inclined surface, or a curved surface. For example, the notch surface 334 shown in FIG. 8 is an inclined surface (a flat surface), and a distance between the inclined surface and the first surface 31 in a vertical direction increases in a direction away from the center of the first surface 31. Thus, it can be ensured that the washer 6 does not deform due to excessive tilting.

Further, in some embodiments, as shown in FIG. 7, an orthographic projection of an innermost edge of the notch surface 334 close to the center of the first surface 31 on the first surface 31 is at least partially located between an orthographic projection of an inner circumferential edge of the washer 6 on the first surface 31 and an orthographic projection of an outer circumferential edge of the washer 6 on the first surface 31. In this way, an orthographic projection of the notch surface 334 on the first surface 31 may partially overlap the orthographic projection of the washer 6 on the first surface 31, that is, the notch surface 334 is only opposite to a portion (a part of an outer ring) of the washer 6, and the other portion (including an inner ring) of the washer 6 is stacked on the first surface 31, so that the first surface 31 may function to support the washer 6 to prevent the washer 6 from being suspended; meanwhile, a gap is provided between the notch surface 334 and the part of the outer ring of the washer 6, so that the operator can press the portion (i.e., the part of the outer ring) of the washer 6 corresponding to the gap with the tweezers to tilt the washer 6, and then pick up the washer 6, which causes no contact and friction between the tweezers and the electrode member 3, thereby avoiding the particle shedding.

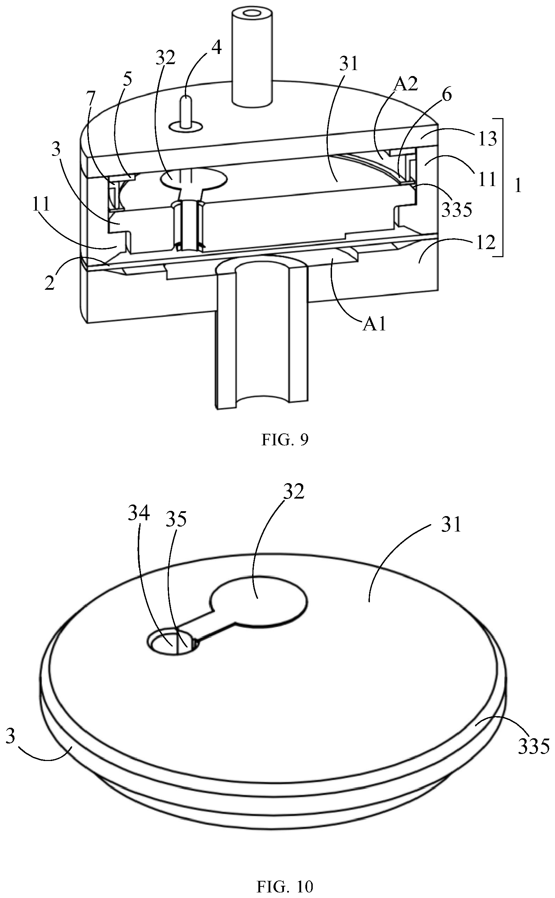

In another embodiment of the present disclosure, as shown in FIG. 9 and FIG. 10, the notch structure includes at least one notch surface 335 which is formed on the edge of the first surface 31 and recessed relative to the first surface 31 in a direction away from the first surface 31. The notch surface 335 is, for example, an annular surface in a circumferential direction of the first surface 31, and an inner diameter of the annular surface is greater than an inner diameter of the washer 6 and less than an outer diameter of the washer 6. In this way, an inner circumferential edge of the annular surface is located between the inner circumferential edge and the outer circumferential edge of the washer 6, so that an orthographic projection of the annular surface on the first surface 31 may partially overlap the orthographic projection of the washer 6 on the first surface 31. That is, the annular surface is only opposite to the outer ring of the washer 6, and the inner ring of the washer 6 is stacked on the first surface 31, so that the first surface 31 may function to support the washer 6 to prevent the washer 6 from being suspended. Meanwhile, a gap is provided between the annular surface and the outer ring of the washer 6, so that the operator can press the part (i.e., the outer ring) of the washer 6 corresponding to the gap with the tweezers to tilt the washer 6, and then pick up the washer 6, which causes no contact and friction between the tweezers and the electrode member 3, thereby avoiding the particle shedding.

In some embodiments, the annular surface includes at least one of a stepped surface, an inclined surface, or a curved surface. For example, the annular surface shown in FIG. 10 is an inclined surface (a flat surface), and a distance between the inclined surface and the first surface 31 in a vertical direction increases in a direction away from the center of the first surface 31. Thus, it can be ensured that the washer 6 does not deform due to excessive tilting.

As another technical solution, referring to FIG. 1 and FIG. 2, an embodiment of the present disclosure further provides an electrode member 3, which is configured to form, in a cavity 1 of a pressure sensor, a capacitor together with a movable membrane 2 disposed in the cavity 1, the electrode member 3 includes an insulating body having a first surface and a second surface opposite to each other, and the first surface and the second surface are respectively provided with conductive layers electrically connected to each other. For example, the first surface and the second surface are the upper surface and the lower surface of the insulating body shown in FIG. 2 respectively, and the first surface and the second surface are respectively provided with two conductive layers 32 electrically connected to each other. The two conductive layers 32 are described in detail in the above embodiments, and thus will not be described here.

Further, the insulating body is provided with a notch structure in the first surface 31, the notch structure includes at least one recess, a preset distance D1 is provided between an innermost edge of the recess close to a center of the first surface 31 and the center of the first surface 31 in a radial direction of the first surface 31, and the preset distance D1 is such configured that the innermost edge of the recess close to the center of the first surface 31 is at least partially exposed in the cavity 1.

With the innermost edge of the recess close to the center of the first surface 31 at least partially exposed in the cavity 1, after a washer 6 is mounted, a part of the recess can be exposed in the cavity 1 and the remaining part can be covered by the washer 6 due to the preset distance of the recess. Thus, when the operator replaces the washer 6, the operator can insert the tweezers into the part of the recess which is exposed to the cavity 1, and pick up the washer 6 from the electrode member 3, without contact and friction between the tweezers and the electrode member 3 or with a reduced shear stress in case of contact, thereby reducing or even avoiding the particle shedding.

In an embodiment of the present disclosure, a ratio of the preset distance D1 to a radius of the first surface 31 is greater than or equal to 0.5 and less than or equal to 0.9. By setting the ratio within this numerical range, for each of electrode members 3 with different radii, the innermost edge of the notch structure close to the center of the first surface 31 can be partially exposed in the cavity 1 due to the preset distance D1 of the recess. Further, in some embodiments, the preset distance is greater than or equal to 5 mm and less than or equal to 35 mm.

In an embodiment of the present disclosure, the recess includes, for example, a structure the same as the blind hole 33 shown in FIG. 2; or the recess includes, for example, a structure the same as the annular recess 331 shown in FIG. 3; or the recess includes, for example, a structure the same as the through groove 332 shown in FIG. 4 or the through groove 333. The blind hole 33, the annular recess 331, the through groove 332, and the through groove 333 are all described in detail above, and thus will not be described here.

As another technical solution, referring to FIG. 7 and FIG. 8, an embodiment of the present disclosure further provides an electrode member 3, which is configured to form, in a cavity 1 of a pressure sensor, a capacitor together with a movable membrane 2 disposed in the cavity 1, the electrode member 3 includes an insulating body having a first surface and a second surface opposite to each other, and the first surface and the second surface are respectively provided with conductive layers electrically connected to each other. For example, the first surface and the second surface are the upper surface and the lower surface of the insulating body shown in FIG. 2 respectively, and the first surface and the second surface are respectively provided with two conductive layers 32 electrically connected to each other. The two conductive layers 32 are described in detail in the above embodiments, and thus will not be described here.

Further, the insulating body is provided with a notch structure in the first surface 31, and the notch structure includes at least one notch surface 334 which is formed on an edge of the first surface 31 and recessed relative to the first surface 31 in a direction away from the first surface 31.

A gap below a washer 6 is provided between the notch surface 334 and a portion of the washer 6, and the other portion of the washer 6 is in contact with the first surface 31 of the insulating body. In this way, the insulating body may still support the washer 6; meanwhile, by providing the gap between the notch surface 334 and the washer 6, the operator can press the portion of the washer 6 corresponding to the gap with the tweezers to tilt the washer 6, and then pick up the washer 6, which not only has a relatively small effect on the stiffness of the electrode member 3, but also causes no contact and friction between the tweezers and the electrode member 3, thereby avoiding the particle shedding.

In an embodiment of the present disclosure, the notch surface 334 includes at least one of a stepped surface, an inclined surface, or a curved surface. For example, the notch surface 334 shown in FIG. 8 is an inclined surface (a flat surface), and the distance between the inclined surface and the first surface 31 in a vertical direction increases in a direction away from a center of the first surface 31. Thus, it can be ensured that the washer 6 does not deform due to excessive tilting.

Further, in some embodiments, a preset distance D2 is provided between at least a part of an orthographic projection of an innermost edge of the notch surface 334 close to the center of the first surface 31 on the first surface 31 and the center of the first surface 31 in a radial direction of the first surface 31. The preset distance D2 meets that a gap below the washer 6 is provided between the notch surface 334 and a portion of the washer 6 and the other portion of the washer 6 is in contact with the first surface 31 of the insulating body. In this way, the insulating body may still support the washer 6; meanwhile, by providing the gap between the notch surface 334 and the washer 6, the operator can press the portion of the washer 6 corresponding to the gap with the tweezers to tilt the washer 6, and then pick up the washer 6, which not only has a relatively small effect on the stiffness of the electrode member 3, but also causes no contact and friction between the tweezers and the electrode member 3, thereby avoiding the particle shedding.

In an embodiment of the present disclosure, a ratio of the preset distance D2 to a radius of the first surface 31 is greater than or equal to 0.6 and less than or equal to 1. By setting the ratio within this numerical range, for each of electrode members 3 with different radii, the gap below the washer 6 can be provided between the notch surface 334 and a portion of the washer 6 and the other portion of the washer 6 can be in contact with the first surface 31 of the insulating body. In some embodiments, the preset distance D2 is greater than or equal to 7 mm and less than or equal to 40 mm.

Further, in some embodiments, as shown in FIG. 7 and FIG. 8, the orthographic projection of the innermost edge of the notch surface 334 close to the center of the first surface 31 on the first surface 31 is at least partially located between an orthographic projection of an inner circumferential edge of the washer 6 on the first surface 31 and an orthographic projection of an outer circumferential edge of the washer 6 on the first surface 31. In this way, an orthographic projection of the notch surface 334 on the first surface 31 may partially overlap an orthographic projection of the washer 6 on the first surface 31, that is, the notch surface 334 is only opposite to a portion (a part of an outer ring) of the washer 6, and the other portion (including an inner ring) of the washer 6 is stacked on the first surface 31, so that the first surface 31 may function to support the washer 6 to prevent the washer 6 from being suspended; meanwhile, a gap is provided between the notch surface 334 and the part of the outer ring of the washer 6, so that the operator can press the portion (i.e., the part of the outer ring) of the washer 6 corresponding to the gap with the tweezers to tilt the washer 6, and then pick up the washer 6, which causes no contact and friction between the tweezers and the electrode member 3, thereby avoiding the particle shedding.

In another embodiment of the present disclosure, as shown in FIG. 9 and FIG. 10, the notch structure includes at least one notch surface 335 which is formed on the edge of the first surface 31 and recessed relative to the first surface 31 in a direction away from the first surface 31. The notch surface 335 is, for example, an annular surface in a circumferential direction of the first surface 31, and an inner diameter of the annular surface is greater than an inner diameter of the washer 6 and less than an outer diameter of the washer 6. In this way, an inner circumferential edge of the annular surface is located between the inner circumferential edge and the outer circumferential edge of the washer 6, so that an orthographic projection of the annular surface on the first surface 31 may partially overlap the orthographic projection of the washer 6 on the first surface 31. That is, the annular surface is only opposite to the outer ring of the washer 6, and the inner ring of the washer 6 is stacked on the first surface 31, so that the first surface 31 may function to support the washer 6 to prevent the washer 6 from being suspended. Meanwhile, a gap is provided between the annular surface and the outer ring of the washer 6, so that the operator can press the part (i.e., the outer ring) of the washer 6 corresponding to the gap with the tweezers to tilt the washer 6, and then pick up the washer 6, which causes no contact and friction between the tweezers and the electrode member 3, thereby avoiding the particle shedding.

In some embodiments, the annular surface includes at least one of a stepped surface, an inclined surface, or a curved surface. For example, the annular surface shown in FIG. 10 is an inclined surface (a flat surface), and the distance between the inclined surface and the first surface 31 in a vertical direction increases in a direction away from the center of the first surface 31. Thus, it can be ensured that the washer 6 does not deform due to excessive tilting.

As another technical solution, an embodiment of the present disclosure further provides a pressure sensor. Taking a pressure sensor shown in FIG. 1 as an example, the pressure sensor includes a cavity 1, and an electrode member 3, a movable membrane 2, and a washer 6 are disposed in the cavity 1; the electrode member 3 is supported by a supporting portion 111 disposed in the cavity 1, and forms a capacitor together with the movable membrane 2; the washer 6 is disposed on a first surface 31 of an insulating body of the electrode member 3 away from the movable membrane 2; and the electrode member 3 is the electrode member 3 provided in the above embodiments of the present disclosure.

In an embodiment of the present disclosure, the cavity 1 includes an upper support 11, a lower support 12, and a top cover 13; the upper support 11 and the lower support 12 are located on a side of an upper surface of the movable membrane 2 and a side of a lower surface of the movable membrane 2 respectively, and are both hermetically connected to the movable membrane 2, for example, by welding; a recess is formed in an upper surface of the lower support 12, and a lower space A1 is formed between the lower surface of the movable membrane 2 and the recess; the top cover 13 is located on a side of an upper surface of the upper support 11, and is hermetically connected to the upper support 11, for example, by welding, and the top cover 13 serves as a top wall of the cavity 1; an upper space A2 is enclosed by a lower surface of the top cover 13, the upper surface of the movable membrane 2, and an inner circumferential surface of the upper support 11; and the electrode member 3 is located in the upper space A2, and is supported by the supporting portion 111 of the upper support 11, and the supporting portion 111 is, for example, an annular boss formed on an inner circumferential wall of the upper support 11.

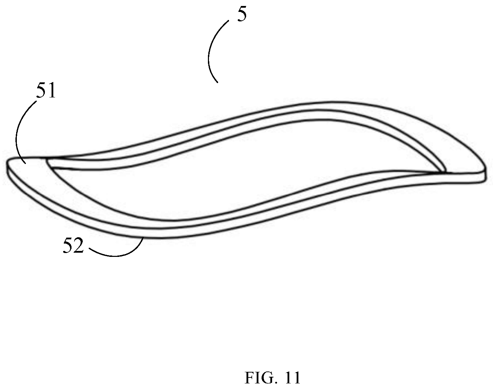

In an embodiment of the present disclosure, as shown in FIG. 11, the pressure sensor further includes an elastic member 5 disposed between the washer 6 and the top wall of the chamber 1 for pressing the electrode member 3 against the supporting portion 111 through the washer 6. The elastic member 5 includes, for example, a wave spring having n crests 51 and n troughs 52, with n being an integer greater than 1, such as n=3 as shown in FIG. 11. In a case where a notch structure includes at least one recess (e.g., the blind hole 33 or the through groove 332), a maximum dimension of the recess in a circumferential direction of the first surface 31 is equal to or less than $1/n$ of a circumference of a circle where the maximum dimension lies, which can avoid suspension of contact points of the wave spring due to an excessive maximum dimension of the recess in the circumferential direction of the first surface 31, thereby preventing the electrode member 3 from being subjected to uneven force.

In a case where the notch structure includes at least one notch surface 334 which is formed on an edge of the first surface 31 and recessed relative to the first surface 31 in a direction away from the first surface 31, a maximum dimension of the notch surface 334 in the circumferential direction of the first surface 31 is equal to or less than $1/n$ of a circumference of a circle where the maximum dimension lies, which can avoid the suspension of the contact points of the wave spring due to an excessive maximum dimension of the notch surface 334 in the circumferential direction of the first surface 31, thereby preventing the electrode member 3 from being subjected to uneven force.

The pressure sensor provided in the embodiments of the present disclosure adopts the electrode member 3 provided in the embodiments of the present disclosure, so that when the operator replaces the washer 6, contact and friction between the tweezers and the electrode member 3 can be avoided or a shear stress generated in case of contact can be reduced, thereby reducing or even avoiding the particle shedding.

It should be understood that the above implementations are just exemplary implementations adopted to illustrate the principle of the present disclosure, and the present disclosure is not limited thereto. Various modifications and improvements can be made by those of ordinary sill in the art without departing from the spirit and essence of the present disclosure, and those modifications and improvements are also considered to fall within the scope of the present disclosure.

## Claims

1. An electrode member for forming, in a cavity of a pressure sensor, a capacitor together with a movable membrane disposed in the cavity, comprising an insulating body, wherein the insulating body has a first surface and a second surface opposite to each other, and the first surface and the second surface are respectively provided with conductive layers electrically connected to each other; and
the insulating body is provided with a notch structure in the first surface, and an orthographic projection of the notch structure on the first surface partially overlaps an orthographic projection of a washer on the first surface, the washer being on the first surface.

2. The electrode member of claim 1, wherein the notch structure comprises at least one recess, an orthographic projection of an outermost edge of the recess away from a center of the first surface on the first surface at least partially falls within the orthographic projection of the washer on the first surface, and an orthographic projection of an innermost edge of the recess close to the center of the first surface on the first surface is at least partially located outside an inner circumferential edge of the orthographic projection of the washer on the first surface.

3. The electrode member of claim 2, wherein the recess comprises an annular recess, which is disposed around the center of the first surface.

4. The electrode member of claim 2, wherein the recess comprises a blind hole; or the recess comprises a through groove having one end extending to an edge of the first surface.

5. The electrode member of claim 4, wherein an opening size of the through groove in a circumferential direction of the first surface decreases from a top of the through groove to a bottom of the through groove in a depth direction of the through groove.

6. The electrode member of claim 4 or 5, wherein a depth of the through groove increases from an end away from the edge of the first surface to the end located on the edge of the first surface.

7. The electrode member of claim 1, wherein the notch structure comprises at least one notch surface, which is formed on an edge of the first surface and recessed relative to the first surface in a direction away from the first surface.

8. The electrode member of claim 7, wherein the notch surface comprises at least one of a stepped surface, an inclined surface, or a curved surface.

9. The electrode member of claim 7 or 8, wherein the notch surface is an annular surface in a circumferential direction of the first surface, and an inner diameter of the annular surface is greater than an inner diameter of the washer and less than an outer diameter of the washer.

10. The electrode member of claim 7 or 8, an orthographic projection of an innermost edge of the notch surface close to a center of the first surface on the first surface is at least partially located between an orthographic projection of an inner circumferential edge of the washer on the first surface and an orthographic projection of an outer circumferential edge of the washer on the first surface.

11. An electrode member for forming, in a cavity of a pressure sensor, a capacitor together with a movable membrane disposed in the cavity, comprising an insulating body, wherein the insulating body has a first surface and a second surface opposite to each other, and the first surface and the second surface are respectively provided with conductive layers electrically connected to each other; and
the insulating body is provided with a notch structure in the first surface, the notch structure comprises at least one recess, a preset distance is provided between an innermost edge of the recess close to a center of the first surface and the center of the first surface in a radial direction of the first surface, and the preset distance is such configured that an innermost edge of the notch structure close to the center of the first surface is at least partially exposed in the cavity.

12. The electrode member of claim 11, wherein a ratio of the preset distance to a radius of the first surface is equal to or greater than 0.5 and equal to or less than 0.9; or
the preset distance is greater than or equal to 5 mm and less than or equal to 35 mm.

13. The electrode member of claim 11, wherein the recess comprises an annular recess, which is disposed around the center of the first surface.

14. The electrode member of claim 11, wherein the recess comprises a blind hole; or the recess comprises a through groove having one end extending to an edge of the first surface.

15. The electrode member of claim 14, wherein an opening size of the through groove in a circumferential direction of the first surface decreases from a top of the through groove to a bottom of the through groove in a depth direction of the through groove.

16. The electrode member of claim 14 or 15, wherein a depth of the through groove increases from an end away from the edge of the first surface to the end located on the edge of the first surface.

17. An electrode member for forming, in a cavity of a pressure sensor, a capacitor together with a movable membrane disposed in the cavity, comprising an insulating body, wherein the insulating body has a first surface and a second surface opposite to each other, and the first surface and the second surface are respectively provided with conductive layers electrically connected to each other; and
the insulating body is provided with a notch structure in the first surface, and the notch structure comprises at least one notch surface, which is formed on an edge of the first surface and recessed relative to the first surface in a direction away from the first surface.

18. The electrode member of claim 17, wherein the notch surface comprises at least one of a stepped surface, an inclined surface, or a curved surface.

19. The electrode member of claim 17 or 18, wherein the notch surface is an annular surface in a circumferential direction of the first surface, and an inner diameter of the annular surface is greater than an inner diameter of a washer and less than an outer diameter of the washer.

20. The electrode member of claim 17 or 18, wherein a preset distance is provided between at least a part of an orthographic projection of an innermost edge of the notch surface close to a center of the first surface on the first surface and the center of the first surface in a radial direction of the first surface.

21. The electrode member of claim 20, wherein a ratio of the preset distance to a radius of the first surface is equal to or greater than 0.6 and equal to or less than 1; or
the preset distance is greater than or equal to 7 mm and less than or equal to 40 mm.

22. A pressure sensor, comprising a cavity, wherein an electrode member, a movable membrane, and a washer are disposed in the cavity, wherein the electrode member is supported by a supporting portion disposed in the cavity, and forms a capacitor together with the movable membrane; and the electrode member is the electrode member of any one of claims 1 to 10; or the electrode member is the electrode member of any one of claims 11 to 16; or the electrode member is the electrode member of any one of claims 17 to 21;
the washer is disposed on the first surface of the insulating body of the electrode member.

23. The pressure sensor of claim 22, further comprising an elastic member, which is disposed between the washer and a top wall of the cavity for pressing the insulating body against the supporting portion through the washer; wherein the elastic member comprises a wave spring, the wave spring has n crests and n troughs, and n is an integer greater than 1; and
the notch structure comprises at least one recess, and a maximum dimension of the recess in a circumferential direction of the first surface is equal to or less than 1/n of a circumference of a circle where the maximum dimension lies.

24. The pressure sensor of claim 22, further comprising an elastic member, which is disposed between the washer and a top wall of the cavity for pressing the insulating body against the supporting portion through the washer; wherein the elastic member comprises a wave spring, the wave spring has n crests and n troughs, and n is an integer greater than 1;

the notch structure comprises a notch surface formed on an edge of the first surface; and
a maximum dimension of the notch surface in a circumferential direction of the first surface is equal to or less than 1/n of a circumference of a circle where the maximum dimension lies.

25. The pressure sensor of claim 22, wherein the cavity comprises an upper support, a lower support, and a top cover; wherein the upper support and the lower support are located on a side of an upper surface of the movable membrane and a side of a lower surface of the movable membrane respectively, and are both hermetically connected to the movable membrane;

a recess is formed in an upper surface of the lower support, and a lower space is formed between the lower surface of the movable membrane and the recess;
the top cover is located on a side of an upper surface of the upper support, is hermetically connected to the upper support, and serves as a top wall of the cavity; an upper space is enclosed by a lower surface of the top cover, the upper surface of the movable membrane, and an inner circumferential surface of the upper support; and the insulating body is located in the upper space, and is supported by the supporting portion of the upper support.

FIG. 1

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/CN2024/124654** |

| A. | CLASSIFICATION OF SUBJECT MATTER |
| --- | --- |

G01L1/14(2006.01)i

According to International Patent Classification (IPC) or to both national classification and IPC

| B. | FIELDS SEARCHED |
| --- | --- |

Minimum documentation searched (classification system followed by classification symbols)

IPC: G01L1, G01L9, G06F3, H05K, B65D

Documentation searched other than minimum documentation to the extent that such documents are included in the fields searched

Electronic data base consulted during the international search (name of data base and, where practicable, search terms used)

CNTXT, CNKI, ENTXTC, VEN: 压力传感器, 电极件, 电容, 真空, 膜, 缺口, 凹槽, 垫片, 垫圈, 弹簧, pressure sensor, electrode piece, capacit+, vacuum, film, notch, groove, gasket, spring

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| PX | CN 117451219 A (BEIJING QIXING HUACHUANG FLOW METER CO., LTD.) 26 January 2024 (2024-01-26)<br>claims 1-25 | 1-25 |
| PX | CN 221037757 U (BEIJING QIXING HUACHUANG FLOW METER CO., LTD.) 28 May 2024 (2024-05-28)<br>claims 1-25 | 1-25 |
| Y | CN 107843379 A (SHENYANG SENSOR TECHNOLOGY INSTITUTE) 27 March 2018 (2018-03-27)<br>description, paragraphs 0016-0018, and figures 1-5 | 1-25 |
| Y | CN 207219160 U (GUANGDONG OPPO MOBILE TELECOMMUNICATIONS CO., LTD.) 10 April 2018 (2018-04-10)<br>description, paragraphs 0027-0042, and figures 1-3 | 1-25 |
| A | CN 101517387 A (PANASONIC ELECTRIC WORKS CO., LTD.) 26 August 2009 (2009-08-26)<br>entire document | 1-25 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **13 January 2025** | **17 January 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/124654**

| C. | DOCUMENTS CONSIDERED TO BE RELEVANT | | |
|---|---|---|
| Category* | Citation of document, with indication, where appropriate, of the relevant passages | Relevant to claim No. |
| A | JP 2003131786 A (WAKO K. K.) 09 May 2003 (2003-05-09)<br>        entire document | 1-25 |
| A | CN 210681570 U (BEIJING TOPVENDOR TECHNOLOGY CO., LTD.) 05 June 2020<br>(2020-06-05)<br>        entire document | 1-25 |

Form PCT/ISA/210 (second sheet) (July 2022)

**INTERNATIONAL SEARCH REPORT**
Information on patent family members

International application No.

**PCT/CN2024/124654**

| Patent document cited in search report | | | Publication date (day/month/year) | Patent family member(s) | | | Publication date (day/month/year) |
|---|---|---|---|---|---|---|---|
| CN | 117451219 | A | 26 January 2024 | None | | | |
| CN | 221037757 | U | 28 May 2024 | None | | | |
| CN | 107843379 | A | 27 March 2018 | None | | | |
| CN | 207219160 | U | 10 April 2018 | None | | | |
| CN | 101517387 | A | 26 August 2009 | JP | 2008089412 | A | 17 April 2008 |
| JP | 2003131786 | A | 09 May 2003 | JP | 4591941 | B2 | 01 December 2010 |
| CN | 210681570 | U | 05 June 2020 | None | | | |

Form PCT/ISA/210 (patent family annex) (July 2022)